# FASCICULE DE BREVET EUROPEEN

(11) **EP 3 714 725 B1**
(45) Date de publication et mention de la délivrance du brevet: **24.05.2023**
(21) Numéro de dépôt: 19165120.7
(22) Date de dépôt: 26.03.2019
(51) Int. Cl.: A44C 5/00, A44C 27/00

(54) **PIECE DE BIJOUTERIE EN MATIERE ELASTOMERE COMPOSITE**
SCHMUCKSTÜCK AUS ELASTOMERVERBUNDMATERIAL
PIECE OF JEWELLERY MADE FROM COMPOSITE ELASTOMER MATERIAL

(43) Date de publication de la demande: 30.09.2020
(73) Titulaire: Omega SA, 2502 Biel/Bienne (CH)
(72) Inventeur: FRANÇOIS, Nicolas, 2000 Neuchâtel (CH); DAHAN, Julien, 2800 Del mont (CH); KISSLING, Gregory, 2520 La Neuveville (CH)
(74) Mandataire: ICB SA

(56) Documents cités:
- EP-A1- 2 468 127
- EP-A1- 3 178 875

## Description

### Domaine de l'invention

La présente invention concerne le domaine technique des matériaux à base d'élastomères. Plus précisément, l'invention concerne une pièce de bijouterie réalisée à partir d'une matière composite élastomère pour la, un procédé de fabrication de pièces, ainsi que les pièces obtenues.

Dans la présente invention, pièce de bijouterie désigne tout objet de parure, mais également des composants utilisés dans l'horlogerie ou dans la joaillerie. Plus particulièrement, l'invention concerne des bracelets, tels que des bracelets de montre.

### Arrière-plan de l'invention

De nombreux matériaux élastomères existent sur le marché et sont connus pour leur utilisation en tant que bracelet par exemple pour leur qualité de confort, de touché souple et leur résistance.

Ainsi, il est connu du document JP 2000204265 de réaliser une matière élastomère thermoplastique comportant des propriétés antibactériennes et présentant une bonne résistance au vieillissement.

On connaît également du brevet EP 2 468 127 une pièce de bijouterie, au moins partiellement réalisée en un matériau composite comprenant une matrice élastomère dans laquelle sont dispersées des charges de renfort choisies parmi le groupe comprenant des microfibres, des nanoparticules de polytétrafluoroéthylène, et leurs mélanges, ledit matériau composite étant obtenu à partir d'une composition comprenant entre 60% et 95% en poids d'au moins un élastomère, entre 0% et 5% en poids de microfibres et entre 0% et 40% en poids de nanoparticules de polytétrafluoroéthylène, par rapport au poids total de la composition, au moins l'une desdites charges de renfort étant présente.

On connait par ailleurs du document EP3178875 une pièce de bijouterie en matière composite élastomère comprenant des microfibres cellulosiques, un additif antibactérien et une masse de charges conductrices thermiquement.

Cependant, ces matières élastomères utilisées pour les bracelets ou les composants d'horlogerie en contact avec la peau ne permettent pas d'obtenir une bonne évacuation de la transpiration, les propriétés antibactériennes permettant seulement de neutraliser les mauvaises odeurs, et les fibres présentes dans la matière ne permettent que de renforcer mécaniquement cette dernière. De plus, les bracelets sont souvent soumis à des frottements ou de l'abrasion ce qui tend à enlever une certaine quantité de l'agent antibactérien et donc à diminuer l'efficacité de ce dernier.

### Résumé de l'invention

L'invention a notamment pour objectif de pallier aux différents inconvénients de ces techniques connues.

Plus précisément, un objectif de l'invention est de fournir une pièce de bijouterie en une matière élastomère destinées à être en contact prolongé avec la peau (direct ou indirect), et obtenir un élastomère avec des propriétés permettant d'améliorer l'évacuation de la transpiration, tout en conservant une bonne colorabilité et une bonne résistance au vieillissement (UV, transpiration, esthétique, déchirement).

Ces objectifs, ainsi que d'autres qui apparaîtront plus clairement par la suite, sont atteints selon l'invention à l'aide d'une pièce de bijouterie selon la revendication 1.

Conformément à d'autres variantes avantageuses de l'invention :
- La matrice élastomère est un fluoroélastomère de type caoutchouc fluorocarbone ;
- la matière élastomère comprend au moins entre 0 et 30% en masse d'un additif colorant ;
- la matière élastomère comprend moins entre 0 et 1% en masse d'agents antiodeurs ;
- la matière élastomère comprend au moins un agent de démoulage ;
- la matière élastomère comprend entre 0 et 1% en masse d'un agent azurant.

L'invention concerne aussi et notamment toute pièce d'horlogerie réalisée en matière élastomère conformément à l'invention.

L'invention concerne également un procédé de fabrication d'une pièce de bijouterie conforme à l'invention, le procédé de fabrication comprend les étapes suivantes :
- réaliser une composition comprenant au moins un élastomère, 2% en masse de fibres cellulosiques courtes de 0.5mm et 1.5% en masse de microfibres cellulosiques longues de 1.5mm, entre 0 et 2% en masse d'un additif antibactérien, entre 0 et 5 % en masse de charges conductrices thermiquement, entre 0 et 1% en masse d'agents anti-odeurs, et entre 0 et 1% en masse de silice ;
- réaliser un moulage de la composition obtenue à l'étape précédente ;
- réaliser les étapes de finition de la pièce moulée obtenue lors de la deuxième étape.

Selon ce procédé, la matrice élastomère est un fluoroélastomère de type caoutchouc fluorocarbone.

D'autres caractéristiques et avantages de l'invention apparaîtront plus clairement à la lecture de la description suivante d'un mode de réalisation particulier de l'invention, donné à titre de simple exemple illustratif et non limitatif.

### Description détaillée des modes de réalisation préférés

L'invention concerne une pièce de bijouterie réalisée en matière composite élastomère, ladite matière composite élastomère comprenant une matrice élastomère dans laquelle est dispersé 2% en masse de microfibres cellulosiques courtes de 1.5mm et 1.5% en masse de microfibres cellulosiques longues de 1.5mm, entre 0 et 2% en masse d'un additif antibactérien, entre 0 et 1 % de charges conductrices thermiquement, entre 0 et 1% d'agents anti-odeurs, et entre 0 et 1% de silice.

Selon l'invention, la matière élastomère choisie pour la matrice est choisie parmi les fluoroélastomères.

Le terme « fluoroélastomère » est utilisé au sens général indépendamment de la teneur en fluor et désigne à la fois les élastomères fluorés dont la chaine principale est partiellement substituée, c'est-à-dire les fluoroélastomères communément appelés FKM, ainsi que les élastomères fluorés dont la chaine principale est entièrement substituée, c'est-à-dire les perfluoroélastomères communément appelés FFKM.

De préférence, l'élastomère est un fluoroélastomère, et plus préférentiellement un fluoroélastomère de type FKM.

La quantité d'élastomère est comprise entre 55% et 95% en poids par rapport au poids total de la composition.

Selon un autre mode de réalisation, la matière élastomère est choisie parmi un ou plusieurs élastomères thermoplastiques tels que le polyuréthane, le polyéther block amide, les copolyesters élastomères, les élastomères acryliques ou les élastomères styréniques.

Encore selon un autre mode de réalisation de l'invention, la matière est choisie parmi des élastomères vulcanisables à froid tels que les silicones.

La dureté de la matière élastomère peut être choisie sur une gamme de 20 shore OO à 90 shore D suivant le besoin haptique et fonctionnel.

Il est possible de réaliser par moulage des éléments durs d'une boîte avec des duretés de 90 shore D par exemple, alors que les matières shore OO et shore A seront plutôt utilisées en revêtement sur un élément dur. Les pièces souples telles que les bracelets seront réalisées à partir d'une dureté shore A.

Par exemple, dans le cas d'une boîte de montre, l'élastomère peut être pulvérisé à la surface de la boite et servir de revêtement, ou bien surmoulé pour apporter un toucher doux.

Selon l'invention, la matière élastomère comprend des charges conductrices thermiquement présentant une conductivité thermique supérieure à 20W.m-1.K-1, telles du nitrure de bore hexagonal ou du graphène ou des nanotubes de carbone, par exemple. La quantité de ces charges conductrices thermiquement dans la matière élastomère est comprise entre 0.04% et 5% en masse et permettent d'accroître la conductivité thermique de la matière d'un facteur 3, de 0.4 à 1.2W.m-1.K-1 sans pour autant accroitre la conductivité électrique de celle-ci. De telles charges conductrices thermiquement ont pour avantage de mieux évacuer la chaleur corporelle et donc de limiter la transpiration.

Selon un aspect avantageux de l'invention, la matière élastomère comprend également un additif antibactérien par exemple à base d'argent de manière à limiter, voire d'empêcher, le développement des bactéries, à la surface et à l'intérieur de la matière, dues essentiellement à la transpiration du porteur lorsque le bracelet est au contact de la peau par exemple.

De préférence, l'additif antimicrobien utilisé est le Sanitized^{®} BC A 21-41. Cet additif se présente sous la forme d'argent encapsulé dans un matériau en verre céramique, sa résistance aux hautes températures permet de l'ajouter facilement dans le mélange sans altérer les propriétés antibactériennes. Selon les besoins, la quantité d'additif antibactérien est comprise entre 0% à 2% en masse.

La matière élastomère comprend aussi un agent anti-odeur tel que par exemple de la zéolite (Lithofill MM) de manière à absorber les odeurs, généralement cet agent se présente sous la forme de grain présentant une taille de 0 à 10 µm. Selon les besoins, la quantité d'agent antiodeur est comprise entre 0% à 1% en masse. Selon une variante de l'invention, la zéolite peut servir de support pour diffuser un parfum, cette dernière pourra par exemple recevoir une ou des huiles essentielles ou encore une ou des fragrances. Un tel mode de réalisation est particulièrement intéressant compte tenu du fait que la zéolite permet de diffuser le parfum pendant une très longue durée.

La matière élastomère comprend un agent de renfort tel que de la silice pour améliorer sa durabilité.

Selon l'invention, la matière élastomère comprend des microfibres hydrophiles agencée pour évacuer l'humidité, et notamment la transpiration, au travers de la matière élastomère. Conformément à la présente invention, les microfibres hydrophiles présentent une finesse inférieure à 150 mTex, ce qui est une taille suffisante pour pouvoir transporter les molécules type H₂O.

Selon l'invention, les fibres hydrophiles sont réalisées en une matière cellulosique, et on utilisera de préférence des fibres de type Lyocell telles que les Lenzing Tencel FCP.

De préférence, la composition selon l'invention comprend 3.5% en poids de microfibres par rapport au poids total de la composition. Les microfibres utilisées présentent une longueur comprise entre 0.5 mm et 1.5mm.

La présence de ces microfibres dans la matière permet de former un réseau de canaux microscopiques, et les nanofibrilles formant les microfibres conduisent l'humidité rapidement et uniformément au travers de la matière.

De manière à améliorer le transport de l'humidité au travers de la matière, les microfibres incorporées dans la matière sont composées de microfibres cellulosiques courtes et de microfibres cellulosiques longues, la longueur des fibres cellulosiques étant comprises entre 0.5mm et 1.5mm.

La composition selon l'invention comprend 2% en poids de microfibres courtes et 1.5% en poids de microfibres longues par rapport au poids total de la composition.

Un tel mélange de microfibres courtes et microfibres longues aux microfibres se touchent et forment des canaux améliorant le pouvoir de diffusion de la matrice formée par la matière élastomère et l'humidité peut être transportée par capillarité à travers la matière et ainsi être évacuée.

Selon l'invention, les microfibres ont préférentiellement une section transversale en forme d'hélice pour leur donner une surface spécifique plus importante et donc un pouvoir de diffusion plus rapide.

Plus précisément, la section des fibres hydrophiles est en forme d'hélice à n pales avec n strictement supérieur à deux, de manière à offrir une plus grande surface spécifique et ainsi favoriser l'évacuation de l'humidité.

La composition peut comprendre également des agents de vulcanisation ou de réticulation propres à l'élastomère, et autres additifs traditionnels communément utilisé par l'homme du métier dans le domaine des formulations à base d'élastomère, et plus particulièrement des formulations à base de fluoroélastomère.

Avantageusement, la composition peut comprendre un colorant ou un pigment. Des mélanges de colorants et/ou de pigments peuvent également être utilisés.

On utilisera par exemple du dioxyde de titane pour réaliser une composition de couleur blanche, dans ce cas la quantité de colorant utilisée est de 30% en masse. De manière à améliorer le rendu de la couleur blanche un agent azurant est utilisé, ce dernier permet de rééquilibrer le spectre de couleurs et de fournir un blanc plus blanc. La quantité d'agent azurant utilisée est d'environ 1% en masse.

Dans le cas d'une composition blanche, on ajoutera un fluoroélastomère de type FKM transparent à hauteur de 10% en masse pour améliorer la résistance à la salissure de la composition et améliorer la souplesse du produit final.

Dans le cas d'une composition de couleur noire, on utilisera directement un fluoroélastomère de type FKM de couleur noire. La couleur noire pouvant être obtenue via du noir de carbone (Grade N-660).

La matière décrite précédemment peut être directement moulée pour réaliser des brins de bracelets mono-matière en élastomère confortable, ou encore surmoulé pour réaliser des brins de bracelets bi-matières confortables, chaque brin présentant une première partie inférieure en matière confortable en contact avec la peau, et une partie supérieure dans une autre matière avantageuse pour sa fonction. On peut également imaginer que chacune des parties présente une couleur différente dans un but purement esthétique.

Ci-après, trois exemples de composition sont décrits, chacun d'entre eux comprend une base qui forme la matrice élastomère dans laquelle sont dispersés les additifs. Ces exemples se basent sur des échantillons réalisés par la demanderesse conformément à l'invention.
Pour un bracelet de couleur noire, la composition suivante est utilisée :
**Première étape (base noire)**

| **Ingrédient** | **Détails** | **% masse** |
|---|---|---|
| FKM | P-457 (Solvay) | 100 |
| NC | Grade N-660 (cabot) | 22 |
| Huile | Nafol 1822B (Sasol) | 1.5 |
| Vulc | Drimix Kenrich (TAIC) | 3 |
| Vulc | Luperox 101XL45 | 2.5 |

**2ème étape (mélange des additifs conforts dans la base)**

| **Ingrédient** | **Détails** | **% masse** |
|---|---|---|
| black base | Selon la formule ci-dessous | 100 |
| short cellulose | Lenzing Tencel FCP, 0.5mm | 2 |
| long cellulose | Lenzing Tencel FCP, 1.5mm | 1.5 |
| zéolite | Lithofill MM | 0.5 |
| Graphene (*) | 8 à 12couches ; 3mu | 0.045 |
| silice | Aerosil 200 | 0.5 |
| Antibacterial | Sanitized BCA21-41 | 2 |

| | | |
|---|---|---|
| (*)Le graphène est ici la charge choisie afin d'améliorer la conductivité thermique du mélange et donc d'améliorer l'échange thermique entre la peau et le bracelet. | | |

Pour un bracelet de couleur blanche, la composition suivante est utilisée :
**1^{ère} étape (base neutre)**

| | | |
|---|---|---|
| FKM | P-457 | 100 |
| Huile | Nafol 1822B (Sasol) | 1.5 |
| Vulc | Drimix Kenrich (TAIC) | 3 |
| Vulc | Luperox 101XL45 | 2.5 |
| silice | Aerosil 200 | 17 |

**2ème étape (mélange des additifs conforts dans la base neutre)**

| | | |
|---|---|---|
| Base neutre | according above formula | 100 |
| short cellulose | Lenzing Tencel FCP, 0.5mm | 2 |
| long cellulose | Lenzing Tencel FCP, 1.5mm | 1.5 |
| zéolite | Lithofill MM | 0.5 |
| Nitre de bore hBN (*) | 3M^{™} Boron Nitride Cooling Filler Flakes CFF 500-3 and 200-3 | 5 |
| TiO2 | TI Pure R104, dupont | 30 |
| silice | Aerosil 200 | 0.5 |
| Antibacterial | Sanitized BCA21-41 | 2 |
| Azurant optique | | 1 |
| Zinc stéarate | | 0.5 |
| FKM transparent(*) | P-957, Solvay | 10 |

| | | |
|---|---|---|
| (*) Le nitrure de bore hexagonal est la charge choisie afin d'améliorer la conductivité thermique du mélange et donc d'améliorer l'échange thermique entre la peau et le bracelet. (*)Le FKM transparent est ajouté en fin de mélange a un fort taux de cisaillement afin de créer un mélange polyphasé (dispersion du FKM transparent dans le mélange initialement réalisé) : cette technique permet d'améliorer la résistance à la salissure du mélange blanc et d'améliorer sa souplesse et donc le confort au porter. | | |

Pour les bracelets ayant une autre couleur, la composition suivante est utilisée :
**1ère étape (base neutre)**

| | | |
|---|---|---|
| FKM | P-457 | 100 |
| Huile | Nafol 1822B (Sasol) | 1.5 |
| Vulc | Drimix Kenrich (TAIC) | 3 |
| Vulc | Luperox 101XL45 | 2.5 |
| silice | Aerosil 200 | 17 |

**2ème étape (mélange des additifs dans la base neutre)**

| | | |
|---|---|---|
| Base neutre | according above formula | 100 |
| short cellulose | Lenzing Tencel FCP, 0.5mm | 2 |
| long cellulose | Lenzing Tencel FCP, 1.5mm | 1.5 |
| zéolite | Lithofill MM | 0.5 |
| Nitre de bore hBN (*) | 3M^{™} Boron Nitride Cooling Filler Flakes CFF 500-3 and 200-3 | 5 |
| silice | Aerosil 200 | 0.5 |
| Antibacterial | Sanitized BCA21-41 | 2 |
| Azurant optique | | 1 |
| Zinc stéarate | | 0.5 |

La pièce de bijouterie en matière composite élastomère selon l'invention est obtenue par un procédé comprenant les étapes suivantes :
- réaliser une préparation d'une composition telle que décrite ci-dessus ;
- réaliser un moulage de la composition obtenue lors de la première étape pour obtenir la forme désirée ;
- réaliser les étapes de finition de la pièce moulée obtenue lors de la deuxième étape.

Selon les besoins de l'homme du métier et des pièces à réaliser, les étapes de finition de la pièce moulée peuvent consister en une couture, l'impression d'un motif, la réalisation de trous dans la matière, etc...

Le moulage de la composition peut être effectué par tout type de procédé connu de l'homme du métier, tel que le moulage par injection, par extrusion ou par compression.

La vulcanisation est réalisée de manière connue à une température généralement comprise entre 130°C et 200°C, pendant un temps suffisant qui peut varier en fonction de la pièce désirée, par exemple entre 60 et 300 secondes en fonction de la température de vulcanisation, du système de vulcanisation adopté et de la cinétique de vulcanisation de la composition.

La pièce de bijouterie peut être par exemple un bracelet, notamment un bracelet de montre. Plus spécifiquement, un bracelet selon l'invention peut présenter des formes et des découpes particulières et répondre malgré tout à un cahier des charges sévère en termes de tenue mécanique, et plus spécifiquement en termes de résistance à la traction, de résistance aux salissures, tout en prodiguant une bonne évacuation de la sueur du porteur.

Une telle matière pour améliorer le confort permet de fabriquer des pièces d'horlogerie ou des bijoux comme des bracelets, des boucles de bracelets, des colliers, des boîtes, des fonds de boîte, des poussoirs, des boucles ou encore des lunettes.

Bien entendu, la présente invention ne se limite pas à l'exemple illustré et est susceptible de diverses variantes et modifications qui apparaîtront à l'homme de l'art.

## Revendications

1. Pièce de bijouterie réalisée en matière composite élastomère, **caractérisée en ce que** la matière composite élastomère comprend une matrice en élastomère dans laquelle est dispersé 2% en masse de microfibres cellulosiques courtes de 0.5mm et 1.5% en masse de microfibres cellulosiques longues de 1.5mm, entre 0 et 2% en masse d'un additif antibactérien, entre 0 et 5 % en masse de charges conductrices thermiquement, entre 0 et 1% en masse d'agents anti-odeurs, et entre 0 et 1% en masse de silice.

2. Pièce de bijouterie selon la revendication 1, **caractérisée en ce que** l'élastomère est un fluoroélastomère de type caoutchouc fluorocarbone (FKM).

3. Pièce de bijouterie selon la revendication 1 ou 2, **caractérisée en ce que** la matière élastomère comprend au moins entre 0 et 30% en masse d'un additif colorant.

4. Pièce de bijouterie selon l'une des revendications 1 à 3, **caractérisée en ce que** la matière élastomère comprend au moins entre 0 et 1% en masse d'agents antiodeurs.

5. Pièce de bijouterie selon l'une des revendications 1 à 4, **caractérisée en ce que** la matière élastomère comprend au moins un agent de démoulage.

6. Pièce de bijouterie selon l'une des revendications 1 à 5, **caractérisée en ce que** la matière élastomère comprend un agent azurant.

7. Procédé de fabrication d'une pièce de bijouterie selon l'une des revendications 1 à 6, **caractérisé en ce qu'**il comprend les étapes suivantes :
- réaliser une composition comprenant au moins un élastomère, 2% en masse de microfibres cellulosiques courtes de 0.5mm et 1.5% en masse de microfibres cellulosiques longues de 1.5mm, entre 0 et 2% en masse d'un additif antibactérien, entre 0 et 5 % en masse de charges conductrices thermiquement, entre 0 et 1% en masse d'agents anti-odeurs, et entre 0 et 1% en masse de silice ;
- réaliser un moulage de la composition obtenue à l'étape précédente ;
- réaliser les étapes de finition de la pièce moulée obtenue lors de la deuxième étape.

8. Procédé selon la revendication 7, **caractérisé en ce que** l'élastomère est un fluoroélastomère de type caoutchouc fluorocarbone.

9. Procédé selon l'une des revendications 7 à 8, **caractérisé en ce que** la composition comprend des charges conductrices thermiquement.

10. Procédé selon l'une des revendications 7 à 9 **caractérisé en ce que** la composition comprend des agents antiodeurs.

11. Procédé selon l'une des revendications 7 à 10, **caractérisé en ce que** la composition comprend des charges de renfort.

12. Procédé selon l'une des revendications 7 à 11, **caractérisé en ce que** la composition comprend au moins un additif colorant.

## Patentansprüche

1. Schmuckstück aus Elastomerverbundmaterial, **dadurch gekennzeichnet, dass** das Elastomerverbundmaterial eine Matrix aus Elastomer umfasst, in der 2 Ma% 0,5 mm kurze Zellulose-Mikrofasern und 1,5 Ma% 1,5 mm lange Zellulose-Mikrofasern, zwischen 0 und 2 Ma% eines antibakteriellen Zusatzes, zwischen 0 und 5 Ma% thermisch leitende Füllstoffe, zwischen 0 und 1 Ma% Anti-Geruchs-Mittel und zwischen 0 und 1 Ma% Siliziumdioxid verteilt sind.

2. Schmuckstück nach Anspruch 1, **dadurch gekennzeichnet, dass** das Elastomer ein Fluorelastomer vom Typ Fluorkohlenwasserstoffkautschuk (FKM) ist.

3. Schmuckstück nach Anspruch 1 oder 2, **dadurch gekennzeichnet, dass** das Elastomermaterial mindestens zwischen 0 und 30 Ma% eines färbenden Zusatzes umfasst.

4. Schmuckstück nach einem der Ansprüche 1 bis 3, **dadurch gekennzeichnet, dass** das Elastomermaterial mindestens zwischen 0 und 1 Ma% Anti-Geruchs-Mittel umfasst.

5. Schmuckstück nach einem der Ansprüche 1 bis 4, **dadurch gekennzeichnet, dass** das Elastomermaterial mindestens ein Entformungsmittel umfasst.

6. Schmuckstück nach einem der Ansprüche 1 bis 5, **dadurch gekennzeichnet, dass** das Elastomermaterial ein aufhellendes Mittel umfasst.

7. Verfahren zur Herstellung eines Schmuckstücks nach einem der Ansprüche 1 bis 6, **dadurch gekennzeichnet, dass** es die folgenden Schritte umfasst:
- Herstellen einer Zusammensetzung, die mindestens ein Elastomer, 2 Ma% 0,5 mm kurze Zellulose-Mikrofasern und 1,5 Ma% 1,5 mm lange Zellulose-Mikrofasern, zwischen 0 und 2 Ma% eines antibakteriellen Zusatzes, zwischen 0 und 5 Ma% thermisch leitende Füllstoffe, zwischen 0 und 1 Ma% Anti-Geruchs-Mittel und zwischen 0 und 1 Ma% Siliziumdioxid umfasst;
- Durchführen eines Formens der in vorangehendem Schritt erhaltenen Zusammensetzung;
- Durchführen der Endbearbeitungsschritte des beim zweiten Schritt erhaltenen Formteils.

8. Verfahren nach Anspruch 7, **dadurch gekennzeichnet, dass** das Elastomer ein Fluorelastomer vom Typ Fluorkohlenwasserstoffkautschuk ist.

9. Verfahren nach einem der Ansprüche 7 bis 8, **dadurch gekennzeichnet, dass** die Zusammensetzung thermisch leitende Füllstoffe umfasst.

10. Verfahren nach einem der Ansprüche 7 bis 9, **dadurch gekennzeichnet, dass** die Zusammensetzung Anti-Geruchs-Mittel umfasst.

11. Verfahren nach einem der Ansprüche 7 bis 10, **dadurch gekennzeichnet, dass** die Zusammensetzung verstärkende Füllstoffe umfasst.

12. Verfahren nach einem der Ansprüche 7 bis 11, **dadurch gekennzeichnet, dass** die Zusammensetzung mindestens einen färbenden Zusatz umfasst.

## Claims

1. Piece of jewellery made from elastomer composite material, **characterised in that** the elastomer composite material comprises a matrix made of elastomer in which 2% by mass of short cellulose microfibers of 0.5mm and 1.5% by mass of long cellulose microfibers of 1.5mm, between 0 and 2% by mass of an antibacterial additive, between 0 and 5% by mass of thermally conductive fillers, between 0 and 1% by mass of anti-odour agents, and between 0 and 1% by mass of silica are dispersed.

2. Piece of jewellery according to claim 1, **characterised in that** the elastomer is a fluoroelastomer of the fluorocarbon rubber type (FKM).

3. Piece of jewellery according to claim 1 or 2, **characterised in that** the elastomer material comprises at least between 0 and 30% by mass of a colour additive.

4. Piece of jewellery according to one of claims 1 to 3, **characterised in that** the elastomer material comprises at least between 0 and 1% by mass of anti-odour agents.

5. Piece of jewellery according to one of claims 1 to 4, **characterised in that** the elastomer material comprises at least one mould release agent.

6. Piece of jewellery according to one of claims 1 to 5, **characterised in that** the elastomer material comprises a brightening agent.

7. Method for manufacturing a piece of jewellery according to one of claims 1 to 6, **characterised in that** it comprises the following steps:
- producing a composition comprising at least one elastomer, 2% by mass of short cellulose microfibers of 0.5mm and 1.5% by mass of long cellulose microfibers of 1.5mm, between 0 and 2% by mass of an antibacterial additive, between 0 and 5% by mass of thermally conductive fillers, between 0 and 1% by mass of anti-odour agents, and between 0 and 1% by mass of silica;
- carrying out a moulding of the composition obtained in the previous step;
- carrying out the finishing steps of the moulded piece obtained during the second step.

8. Method according to claim 7, **characterised in that** the elastomer is a fluoroelastomer of the fluorocarbon rubber type.

9. Method according to one of claims 7 to 8, **characterised in that** the composition comprises thermally conductive fillers.

10. Method according to one of claims 7 to 9, **characterised in that** the composition comprises anti-odour agents.

11. Method according to one of claims 7 to 10, **characterised in that** the composition comprises reinforcing fillers.

12. Method according to one of claims 7 to 11, **characterised in that** the composition comprises at least one colour additive.
